# EUROPÄISCHE PATENTSCHRIFT

(11) **EP 2 538 110 B1**
(45) Veröffentlichungstag und Bekanntmachung des Hinweises auf die Patenterteilung: **23.03.2016**
(21) Anmeldenummer: 12169027.5
(22) Anmeldetag: 23.05.2012
(51) Int. Cl.: F16G 1/10, F16G 1/28

(54) **Kraftübertragungsriemen, insbesondere Zahnriemen**
Power transmission belt, in particular tooth belt
Courroie de transmission de force, notamment courroie dentée

(30) Priorität: 23.06.2011 DE 102011051289
(43) Veröffentlichungstag der Anmeldung: 26.12.2012
(73) Patentinhaber: ContiTech Antriebssysteme GmbH, 30165 Hannover (DE)
(72) Erfinder: Teves, Reinhard, 30926 Seelze (DE); Mahnken, Claus-Lüder, 27367 Ahausen (DE); Baltes, Thomas, 30177 Hannover (DE); Schulte, Hermann, 30823 Garbsen (DE); Unruh, Axel, 30655 Hannover (DE); Berner, Christian, 30177 Hannover (DE)
(74) Vertreter: Preusser, Andrea

(56) Entgegenhaltungen:
- WO-A1-00/19123
- DE-A1-102007 061 735
- DE-T2- 69 404 571
- JP-A- H05 118 388
- JP-A- H09 100 879
- JP-A- H09 100 880
- JP-A- 2001 263 428
- JP-A- 2002 168 303

## Beschreibung

Die Erfindung betrifft einen Kraftübertragungsriemen mit einem elastischen Grundkörper, umfassend eine Decklage als Riemenrücken und einen Unterbau mit einer Kraftübertragungszone, wobei die Kraftübertragungszone und / oder die Decklage mit wenigstens einem textilem Werkstoff bedeckt ist bzw. sind, welcher aus Kette und Schuß besteht.

Kraftübertragungsriemen, die auch als Antriebsriemen bezeichnet werden und im Funktionszustand endlos geschlossen sind, können als Flachriemen, Keilriemen, Keilrippenriemen und Zahnriemen ausgebildet sein.

Die Oberfläche dieser Kraftübertragungsriemen, insbesondere eines Zahnriemens, muss gute Temperatur- und Chemikalienbeständigkeit aufweisen. Erreicht wird eine derartige Oberfläche durch eine textile Auflage, die gegebenenfalls noch mit einer Beschichtung versehen werden kann.

Wird der Kraftübertragungsriemen unter einer Ölatmosphäre betrieben, so ist zusätzlich eine gute Ölbeständigkeit gefordert, wobei die Beschichtung und die darunter liegende(n) Gummimischung(en) vor dem Eindringen von Öl geschützt werden.

Zur verbesserten Haltbarkeit, insbesondere zur optimierten Temperaturbeständigkeit, eines Zahnriemens ist aus EP 0 965 771 B1 bekannt, den Zahnriemen mit einem Gewebe zu versehen, welches aus Kette und Schuß besteht, wobei der Schuß aus einem Kernfaden besteht, der wiederum von zwei Verbundfäden derart umwickelt ist, dass der eine Verbundfaden um den anderen Verbundfaden gewickelt ist und der so mit dem anderen Verbundfaden umwickelte eine Verbundfaden um den Kernfaden gewickelt wird.

Ebenso zur Verbesserung der Hitzebeständigkeit wird in EP 0 637 704 B1 vorgeschlagen, dass die Längsfäden des Webstoffs aus umwickelten Garnen gebildet werden, wobei zwei Garne direkt um einen Kern gedreht werden.

In JP 63-019443 A wird die Lebensdauer eines Zahnriemens dadurch gewährleistet, dass der Zahnriemen mit einem Textil versehen ist, welches aus einem mit einem weiteren Garn umwickelten Kerngarn aufgebaut ist. Die Erhöhung der Lebensdauer eines Zahnriemens wird in JP 64-083952 A durch das Umwickeln des Kerngarns der Kette eines Gewebes, welches aus Kette und Schuß besteht, mit zwei weiteren Garnen erreicht.

In DE69404571T2 wird ein Kraftübertragungsriemen gemäß dem Oberbegriff des Anspruchs 1 offenbart.

Aufgabe der vorliegenden Erfindung ist es nun, einen Kraftübertragungsriemen bereitzustellen, der sich durch eine verbesserte Lebensdauer, vor allem durch eine optimierte Temperatur-, Chemikalien- und Ölbeständigkeit, aufgrund eines zum Stand der Technik alternativen Aufbaus des Schußgarns, auszeichnet.

Gelöst wird diese Aufgabe dadurch, dass die Decklage und / oder die Kraftübertragungszone des Kraftübertragungsriemens mit wenigstens einem textilem Werkstoff bedeckt ist bzw. sind, welcher aus Kette und Schuß besteht, wobei der Schuß wenigstens einen elastischen Faden als Kerngarn und wenigstens zwei weitere Umwindegarne enthält, wobei das erste Umwindegarn direkt auf das Kerngarn gewickelt ist und das zweite Umwindegarn gegenläufig auf das erste Umwindegarn, welches das Kerngarn umwickelt, gewickelt ist und wobei die Kraftübertragungszone und / oder die Decklage zusätzlich mit einer Beschichtung auf der Basis wenigstens eines Acrylats versehen ist.

Überraschenderweise wurde gefunden, dass sich ein derartig ausgestalteter Riemen durch eine besonders gute Medienbeständigkeit, insbesondere gegenüber Öl, auszeichnet. Gleichzeitig zeigt sich auch eine Verbesserung der Temperaturbeständigkeit, so dass sich insgesamt eine höhere Lebensdauer des Riemens ergibt.

Decklage und Unterbau bilden dabei als Gesamteinheit den elastischen Riemengrundkörper des Kraftübertragungsriemens, der aus einem elastomeren Werkstoff besteht, insbesondere in Form einer vulkanisierten Kautschukmischung. Als Kautschukkomponente wird zumeist ein Ethylen-Propylen-Mischpolymerisat (EPM), ein Ethylen-Propylen-Dien-Misch-Polymerisat (EPDM), ein (teil)hydrierter Nitrilkautschuk (HNBR), Chloroprenkautschuk (CR) oder Fluor-Kautschuk (FPM) eingesetzt. Etwaige Zugstränge bestehen aus Stahl, Polyamid, Aramid, Polyester, Glasfasern, Kohlefasern, Polyetherketon (PEEK), Polytehylen-2,6-naphthalat (PEN), Basalt oder Polybenzoxazole (PBO).

Bei dem textilen Werkstoff handelt es sich vorteilhafterweise um ein Gewebe, Gewirke oder Gestrick. Relevant ist, dass der textile Werkstoff aus Kette und Schuß besteht, wobei der Schuß wenigstens einen elastischen Faden als Kerngarn und wenigstens zwei weitere Umwindegarne enthält, wobei das erste Umwindegarn direkt auf das Kerngarn gewickelt ist und das zweite Umwindegarn gegenläufig auf das erste Umwindegarn, welches das Kerngarn umwickelt, gewickelt ist. Die beiden Umwindegarne können hierbei gleich oder verschieden sein, wodurch unterschiedlichen Anforderungen an den Riemen erfüllt werden können.

Das Kerngarn besteht vorteilhafterweise aus Polyurethan oder einem anderen geeigneten elastischen Material, wobei hier beispielsweise Gummifäden, zum Beispiel aus Dienkautschuk, wie Naturkautschuk oder Butadienkautschuk, EPDM oder vergleichbaren, bevorzugt jeweils vernetzt, oder unverstrecktes Polyamid, bevorzugt PA6.6, oder elastische Polyester (z.B. PET, PTT, PBT) bzw. sog. Multelastester (Polyetherester PEE), oder auch elastische Copolymere geeignet sind.

Bei dem ersten Umwindegarn und / oder dem zweiten Umwindegarn kann es sich jeweils um ein Garn aus Naturfasern, wie beispielsweise Flachs, Leinen oder Hanf handeln. Ebenso können aber auch Polyester, Polyamide oder Aramide Verwendung finden. Vorzugsweise wird als Polyamid PA6.6 verwendet. Polyamide sind beispielsweise unter den Handelsnamen Nylon, Cordura oder Perlon zu erwerben.

Als Aramide können para-Aramide, wie bspw. Twaron oder Kevlar, para-Aramid-Copolymer, wie bspw. Technora oder meta-Aramide, wie bspw. Teijinconex oder Nomex, verwendet werden. So ist es beispielsweise besonders vorteilhaft, wenn stretch-broken-Garne eingesetzt werden. Aramid stretch broken ist zum Beispiel unter dem Handelsnamen Technora stretch broken erhältlich.

Der Begriff "stretch broken" bedeutet, dass die Fasern während der Herstellung heiß gezogen und gebrochen werden, um eine kurze Faserlänge zu erhalten. Dadurch werden Schäden am Garn bzw. der Faser vermieden, sie sonst durch das Kürzen (Schneiden) der Faser entstehen würden.

Insbesondere Aramid und Polyamid 6.6 haben sich für die vorliegende Erfindung als besonders geeignet gezeigt.

Aramid ist zwar etwas beständiger gegenüber Temperatur- und Chemikalieneinflüsse, dafür aber dynamisch geringfügig etwas schlechter als Polyamid 6.6.

Dies kann dadurch ausgeglichen werden, dass der erfindungsgemäße Kraftübertragungsriemen in einer besonderen Ausführungsform mit einer Beschichtung versehen ist. Insbesondere die Kraftübertragungszone und / oder die Decklage sind hierbei mit einer Beschichtung versehen. Es ist aber auch möglich, dass der Kraftübertragungsriemen vollständig mit der Beschichtung ummantelt ist, d.h. dass neben der Kraftübertragungszone und der Decklage ebenso die beiden Kanten beschichtet sind.

Besonders gute Eigenschaften ergeben sich, wenn die Beschichtung auf der Basis wenigstens eines Acrylats ist, wie es in der WO 2011/029710A1 beschrieben ist.

Hierbei kann es sich um Substanzen aus der Gruppe der Methacrylate und / oder der Acrylate handeln.

Werden Acrylate verwendet, so haben diese bevorzugt Isocyanatgruppen, bevorzugt mit. difunktionellen Gruppen am Kettenende.

In einer besonders bevorzugten Ausführungsform handelt es sich um Dipropylenglycoldiacrylat (DPGDA) und / oder Tripropylenglycoldiacrylat (TPGDA) und / oder Hexandioldiacrylat (HDDA), bevorzugt Hexan-1,6-dioldiacrylat (1,6-HDDA) und / oder Trimethylpropantriacrylat (TMPTA) und / oder Diurathendimethacrylat (HEMA-MDI).

Die genannten Acrylate können alleine oder in Kombination mit wenigstens einem weiteren verwendet werden.

Des Weiteren kann die Beschichtung noch wenigstens einen pulverförmigen Gleitkörper enthalten, welcher ausgewählt ist aus der Gruppe, bestehend aus Polytetrafluorethylen (PTFE) und / oder modifiziertem Polytetrafluorethylen (TFM) und / oder Fluorethylenpolymer (FEP) und / oder Perfluoralkylvinylether-Tetraethylen-Copolymer (PFA) und / oder Ethylen-Tetrafluorethylen-Copolymer (ETFE) und / oder Polyvinylfluorid (PVF) und / oder Polyvinylidenflourid (PVDF) und / oder ultrahochmolekularem Polyethylen (UHMWPE), wobei Polytetrafluorethylen (PTFE) und / oder modifiziertes Polytetrafluorethylen (TFM) besonders bevorzugt sind.

Es ist auch denkbar andere, der fachkundigen Person bekannte pulverförmige Gleitkörper, wie beispielsweise Silikate, Sulfide (bspw. Molybdänsulfid), Nitride (bspw. Bornitrid) Graphit, etc. zu verwenden. Die pulverförmigen Gleitkörper dienen zur weiteren Verringerung des Reibbeiwertes.

Die Beschichtung kann dabei einschichtig oder mehrschichtig sein.

Besonders vorteilhaft ist es, wenn die Beschichtung einen mehrschichtigen Aufbau aufweist. Die erste Schicht besteht vorzugsweise aus einem acrylatbasiertem System wie bereits oben beschrieben, in einer besonders bevorzugten Ausführungsform in Kombination mit einem polyurethanbasierten System, und enthält einen Anteil an flüchtigen Lösungsmitteln, welche nach der Trocknung Lücken hinterlassen und somit die Beweglichkeit des textilen Werkstoffs nur in geringem Maß behindern.

Der Anteil an flüchtigen Lösungsmitteln in der ersten Schicht beträgt daher bevorzugt zwischen 10 und 30 Gew. -%.

Die zweite Schicht enthält maximal 10 Gew. -%, bevorzugt maximal 5 Gew. -%, besonders bevorzugt maximal 1 Gew. -% flüchtige Lösungsmittel und dient vorzugsweise als Sperrschicht gegenüber Chemikalien, die in den Riemen eindringen und diesen zerstören können. In einer besonders bevorzugten Ausführungsform ist die zweite Schicht frei von flüchtigen Lösungsmitteln, d.h. sie enthält von diesen 0 Gew. -%.

Flüchtige Lösungsmittel sind alle der fachkundigen Person bekannten flüchtigen Lösungsmittel, wobei Toluol, Xylol, Ester, insbesondere Essigester, Acetate, insbesondere Butylacetat, Alkanole, insbesondere Methanol, besonders bevorzugt sind.

Der Kraftübertragungsriemen findet Verwendung als Flachriemen, Keilriemen, Keilrippenriemen und Zahnriemen, wobei letzterer besonders bevorzugt ist.

Die Erfindung wird nun ferner anhand von drei Ausführungsbeispielen unter Bezugnahme auf schematische Darstellungen beschrieben.

Es zeigen:
- Fig. 1: Längsschnitt durch einen Zahnriemen mit einer zusätzlichen Beschichtung für die Kraftübertragungszone und für die Decklage.
- Fig. 2: Längsschnitt durch einen Kraftübertragungsriemen mit einem Gewebe aus Polyurethan und einer zweigeteilten zusätzlichen Beschichtung
- Fig. 3: Aufbau des Schußgarns

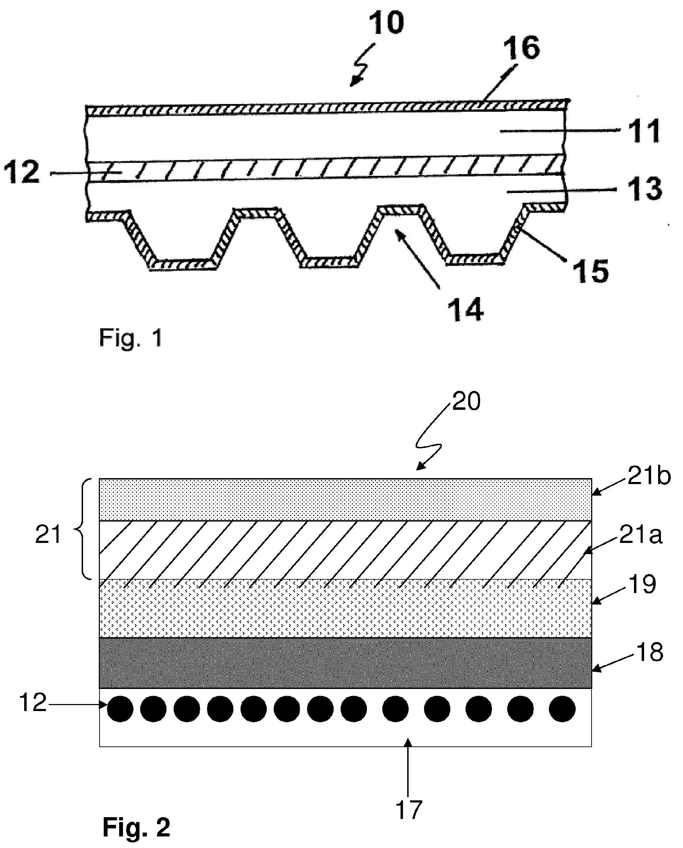

Figur 1 zeigt einen Antriebsriemen 10 in Form eines Zahnriemens mit einer Decklage 11 als Riemenrücken, einer Festigkeitsträgerlage 12 in Form von in Längsrichtung verlaufenden parallel angeordneten Zugträgern sowie mit einem Unterbau 13. Der Unterbau umfasst dabei die Kraftübertragungszone 14. Sowohl die Decklage 11 als auch die Kraftübertragungszone 14 sind jeweils mit einem textilen Werkstoff, z.B. einem Gewebe, aus Kette und erfindungsgemäßem Schuß versehen, wobei sich auf dem Gewebe zusätzlich eine Beschichtung 15, 16 befindet.

Figur 2 zeigt einen Kraftübertragungsriemen 20 mit einem elastischen Grundkörper 17 als Gesamteinheit von Decklage und Unterbau. Die Beschichtung 21 der Kraftübertragungszone und / oder der Decklage enthält hierbei eine erste Schicht 21a, welche bevorzugt lösemittelhaltig ist, und eine zweite Schicht 21b, welche bevorzugt lösemittelfrei ist. Der textile Werkstoff 19, welcher aus Kette und Schuß besteht, ist über eine Haftschicht 18, welche bevorzugt aus einer HNBR-Gummierungslösung besteht, mit dem elastischen Grundkörper 17 verbunden.

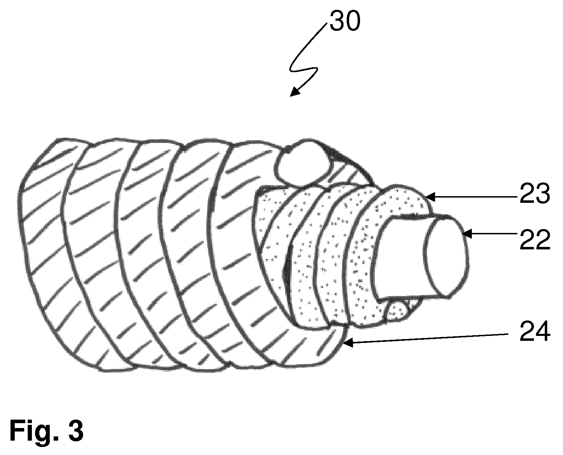

Figur 3 zeigt den erfindungsgemäßen Aufbau des Schußgarns 30. Hierbei ist das Kerngarn 22, bevorzugt aus Polyurethan, mit einem ersten Umwindegarn 23 vollständig umwickelt, während das zweite Umwindegarn 24 das erste Umwindegarn vollständig gegenläufig umwickelt. Bevorzugt handelt es sich bei dem ersten Umwindegarn 23 und dem zweiten Umwindegarn 24 jeweils um para-Aramid-Copolymer (z.B. Technora®). Bevorzugt hat das zweite Umwindegarn 24 keinen direkten Kontakt zum Kerngarn 22.

### Bezugszeichenliste

### (Teil der Beschreibung)

- 10: Zahnriemen
- 20: Kraftübertragungsriemen
- 30: Schuß
- 11: Decklage als Riemenrücken
- 12: Festigkeitsträger in Form von Zugsträngen
- 13: Unterbau
- 14: Kraftübertragungszone
- 15: Textiler Werkstoff mit Beschichtung (Kraftübertragungszone)
- 16: Textiler Werkstoff mit Beschichtung (Decklage)
- 17: elastischer Grundkörper
- 18: Haftschicht
- 19: textiler Werkstoff
- 21: Beschichtung, aufgeteilt in eine erste Schicht 21a und eine zweite Schicht 21b
- 22: Kerngarn
- 23: Erstes Umwindegarn
- 24: Zweites Umwindegarn

## Patentansprüche

1. Kraftübertragungsriemen (10, 20) mit einem elastischen Grundkörper (17), umfassend eine Decklage (11) als Riemenrücken und einen Unterbau (13) mit einer Kraftübertragungszone (14), wobei die Kraftübertragungszone (14) und / oder die Decklage (11) mit wenigstens einem textilem Werkstoff (19) bedeckt ist bzw. sind, welcher aus Kette und Schuß (30) besteht, wobei der Schuß (30) wenigstens einen elastischen Faden als Kerngarn (22) und wenigstens zwei weitere Umwindegarne (23, 24) enthält, wobei das erste Umwindegarn (23) direkt auf das Kerngarn (22) gewickelt ist und das zweite Umwindegarn (24) gegenläufig auf das erste Umwindegarn (23), welches das Kerngarn (22) umwickelt, gewickelt , **dadurch gekennzeichnet, dass** die die Kraftübertragungszone (14) und / oder die Decklage (11) zusätzlich mit einer Beschichtung (15, 16, 21) auf der Basis wenigstens eines Acrylats versehen ist.

2. Kraftübertragungsriemen nach Anspruch 1, **dadurch gekennzeichnet, dass** der textile Werkstoff (19) ein Gewebe, Gewirke oder Gestrick ist.

3. Kraftübertragungsriemen nach Anspruch 1 oder 2, **dadurch gekennzeichnet, dass** das erste Umwindegarn (23) und das zweite Umwindegarn (24) gleich oder verschieden sind.

4. Kraftübertragungsriemen nach einem der Ansprüche 1 bis 3, **dadurch gekennzeichnet, dass** das erste Umwindegarn (23) und / oder das zweite Umwindegarn (24) ein Aramidgarn oder ein Polyamidgarn ist.

5. Kraftübertragungsriemen nach einem der Ansprüche 1 bis 4, **dadurch gekennzeichnet, dass** das Kerngarn (22) aus wenigstens einem Polyurethan besteht.

6. Kraftübertragungsriemen nach einem der Ansprüche 1 bis 5, **dadurch gekennzeichnet, dass** er als Zahnriemen (10) ausgebildet ist.

## Claims

1. Power transmission belt (10, 20) with an elastic main body (17) comprising a covering layer (11) as belt spine and a substructure (13) with a power transmission zone (14), wherein the power transmission zone (14) and/or the covering layer (11) are/is covered with at least one textile material (19) which consists of warp and weft (30), wherein the weft (30) contains at least one elastic thread as core yarn (22) and at least two further overwrapping yarns (23, 24), wherein the first overwrapping yarn (23) is wound directly onto the core yarn (22) and the second overwrapping yarn (24) is oppositely wound onto the first overwrapping yarn (23) which winds around the core yarn (22), **characterized in that** a coating (15, 16, 21) based on at least one acrylate is additionally provided to the power transmission zone (14) and/or the covering layer (11).

2. Power transmission belt according to Claim 1, **characterized in that** the textile material (19) is a woven or knitted fabric.

3. Power transmission belt according to Claim 1 or 2, **characterized in that** the first overwrapping yarn (23) and the second overwrapping yarn (24) are the same or different.

4. Power transmission belt according to any one of Claims 1 to 3, **characterized in that** the first overwrapping yarn (23) and/or the second overwrapping yarn (24) are/is an aramid yarn or a polyamide yarn.

5. Power transmission belt according to any one of Claims 1 to 4, **characterized in that** the core yarn (22) consists of at least one polyurethane.

6. Power transmission belt according to any one of Claims 1 to 5, **characterized in that** it is configured as a toothed belt (10).

## Revendications

1. Courroie de transmission (10, 20) comportant un corps de base élastique (17) comprenant une couche de couverture (11) en tant que dos de la courroie et une base (13) ayant une zone de transmission (14), la zone de transmission (14) et/ou la couche de couverture (11) étant couvertes d'au moins un matériau textile (19), lequel est constitué d'une chaîne et d'une trame (30), la chaîne (30) contenant au moins un fil élastique servant de fil d'âme (22) et au moins deux fils de guipage supplémentaires (23, 24), le premier fil de guipage (23) étant directement enroulé sur le fil d'âme (22), et le deuxième fil de guipage (24) étant enroulé dans le sens contraire sur le premier fil de guipage (23) qui entoure le fil d'âme (22), **caractérisée en ce que** la zone de transmission (14) et/ou la zone de couverture (11) sont en outre pourvues d'un revêtement (15, 16, 21) à base d'au moins un acrylate.

2. Courroie de transmission selon la revendication 1, **caractérisée en ce que** le matériau textile (19) est un tissu tissé, tricoté ou maillé.

3. Courroie de transmission selon la revendication 1 ou 2, **caractérisée en ce que** le premier fil de guipage (23) et le deuxième fil de guipage (24) sont identiques ou différents.

4. Courroie de transmission selon l'une des revendications 1 à 3, **caractérisée en ce que** le premier fil de guipage (23) et/ou le deuxième fil de guipage (24) sont des fils en aramide ou des fils en polyamide.

5. Courroie de transmission selon l'une des revendications 1 à 4, **caractérisée en ce que** le fil d'âme (22) est constitué d'au moins un polyuréthanne.

6. Courroie de transmission selon l'une des revendications 1 à 5, **caractérisée en ce qu'**elle est conçue comme une courroie crantée (10).
